# EUROPEAN PATENT APPLICATION

(11) **EP 4 580 007 A1**
(43) Date of publication of application: **02.07.2025**
(21) Application number: 23856623.6
(22) Date of filing: 22.08.2023
(51) Int. Cl.: H02K 1/32, H02K 9/19

(54) **MOTOR ROTOR, MOTOR AND VEHICLE**

(30) Priority: 26.08.2022 CN 202222259419 U
(71) Applicant: Valeo Power Technology (Nanjing) Co., Ltd, Nanjing, Jiangsu 211153 (CN)
(72) Inventor: HU, Kaiming, Suzhou, Jiangsu 215500 (CN); LV, Chun, Suzhou, Jiangsu 215500 (CN); CHEN, Qingfeng, Suzhou, Jiangsu 215500 (CN); JIANG, Qingsong, Shanghai 201108 (CN); YING, Renlong, Shanghai 201108 (CN); WANG, Shengjian, Shanghai 201108 (CN)
(74) Representative: Valeo Powertrain Systems
(86) International application number: PCT/CN2023/114259
(87) International publication number: WO 2024/041534

(57) **Abstract**

The present invention relates to a motor rotor (100), including a rotor shaft (10), a core part (20) and end plates (30). The rotor shaft (10) rotates about a rotation axis (X), the core part (20) is rotatably fixed to the rotor shaft (10), and the end plates (30) are arranged at two axial ends of the core part (20). The motor rotor (100) further includes an oil cooling system. The oil cooling system includes an inlet (1) arranged on the rotor shaft (10), an outlet (2) arranged on the end plates (30), and a closed channel (3) arranged between the inlet (1) and the outlet (2). The present invention also relates to an electric motor including the motor rotor (100), and a vehicle including the electric motor.

## Description

### Technical Field

The present invention relates to a motor rotor. The present invention also relates to an electric motor comprising such a motor rotor, and a vehicle.

### Background Art

Electric motors for driving electric vehicles are high-powered and generate large amounts of heat during continuous operation. If heat dissipation is insufficient, the heat generated will accumulate inside the electric motor, causing the temperature of the electric motor to rise and affecting the reliability and performance of the electric motor. Thus, a special cooling mechanism must be arranged on the electric motor, to enhance the dissipation of heat from the electric motor. Common electric motor cooling mechanisms may employ air cooling, water cooling and oil cooling, etc. Due to volume limitations, air cooling has limited cooling capacity. Water cooling cannot bring a cooling medium into direct contact with internal components of the electric motor, so has a considerably reduced cooling effect. For these reasons, oil-cooled electric motors, in which a cooling medium (cooling oil) comes into direct contact with internal components of the electric motor, are being used more and more widely in the field of electric vehicles. In an oil-cooled electric motor, the cooling oil is generally introduced at the rotor shaft located on the axis of the electric motor, and caused to flow toward the radially outer stator by the centrifugal force generated during electric motor rotation. In the structure of an existing oil-cooled electric motor, a large amount of cooling oil flows directly to the motor stator under the driving action of the centrifugal force, and does not come into contact with the rotor, which is thus unable to be cooled effectively.

There is thus a need for a motor rotor with a cooling structure capable of causing cooling oil to come into full contact with the motor rotor, so as to provide effective cooling for the motor rotor.

### Summary

In response to the problem and requirement mentioned above, the present invention proposes a novel motor rotor, an electric motor and a vehicle, which solve the abovementioned problem by adopting the following technical features, and also achieve other technical effects.

The motor rotor according to the present invention comprises: a rotor shaft rotating about a rotation axis; a core part rotatably fixed to the rotor shaft; end plates arranged at two axial ends of the core part; and an oil cooling system. The oil cooling system comprises an inlet arranged on the rotor shaft, an outlet arranged on the end plates, and a closed channel arranged between the inlet and the outlet.

An objective of the present invention is to provide a motor rotor, wherein cooling oil is able to be in full contact with the motor rotor to provide effective cooling. The oil cooling system of the motor rotor according to the present invention comprises the closed channel between the inlet on the rotor shaft and the outlet on the end plate. Thus, a cooling oil flow path of direct radial flow from the inlet to a motor stator due to centrifugal action is prohibited. Cooling oil is only able to flow along the closed channel to the outlet, and can thus fully cool the motor rotor.

The motor rotor according to the present invention may also have one or more of the following features, alone or in combination.

According to an embodiment of the present invention, the closed channel comprises the following, through which cooling oil sequentially flows: a first channel located between the rotor shaft and the core part, an intermediate channel located on one of the end plates, a second channel located in the core part, and an outlet channel located on the other end plate.

According to the above feature, cooling oil flows from the rotor shaft to one end plate, flows through the interior of the core part to the other opposite end plate, and then flows out through the outlet. Thus, cooling oil flows in various parts of the motor rotor, and so is able to carry away heat generated by the motor rotor, to fully cool the rotor.

According to an embodiment of the present invention, the intermediate channel comprises a first groove arranged on an inner side of the corresponding end plate, the first groove comprising a first main part and a first connecting part connected to the first channel.

According to an embodiment of the present invention, the first channel comprises a central hole arranged at the center of the rotor shaft and connected to the inlet, an axial groove arranged on an outer surface of the rotor shaft and connected to the first connecting part, and a radial hole connecting the central hole and the axial groove.

According to an embodiment of the present invention, the first channel comprises a central hole arranged at the center of the rotor shaft and connected to the inlet, an axial groove arranged on an inner surface of the core part and connected to the first connecting part, and a radial hole connecting the central hole and the axial groove.

According to the above feature, cooling oil entering through the inlet first flows in the central hole of the rotor shaft, and then flows through the radial hole to the axial groove on the outer surface of the rotor shaft or the axial groove on the inner surface of the core part. That is to say, cooling oil flows through the first channel from the center of the rotor shaft to the outer surface of the rotor shaft or the inner surface of the core part.

According to an embodiment of the present invention, the second channel comprises an axial through-hole running through the core part and connected to the first main part, the axial through-hole being arranged close to a magnet of the motor rotor.

According to the above feature, cooling oil from the axial groove enters the first connecting part of the first groove, and then enters the axial through-hole running through the core part via the first main part of the first groove. Thus, cooling oil flows from the rotor shaft to the axial through-hole in the core part of the motor rotor via the end plate. Since the position of the axial through-hole is close to the magnet of the motor rotor, the magnet can be fully cooled by cooling oil flowing in the axial through-hole, thus preventing deterioration of magnet performance due to heat accumulated during motor operation.

According to an embodiment of the present invention, the outlet channel comprises a second groove arranged on an inner side of the corresponding end plate, the second groove comprising a second main part connected to the axial through-hole and a second connecting part connected to the outlet.

According to the above feature, cooling oil from the axial through-hole of the core part passes through the second main part and the second connecting part of the second groove in succession and then flows out through the outlet.

According to an embodiment of the present invention, the first groove and the second groove are arranged alternately on the same end plate around the rotation axis. That is to say, the first groove and the second groove are arranged at different angular positions on the same end plate.

According to an embodiment of the present invention, the motor rotor further comprises a sealing cover arranged at the end of the rotor shaft which is opposite the inlet for sealing the closed channel. The end plate of the motor rotor is unable to completely seal an end of the axial groove. The sealing cover can achieve complete sealing of the axial groove, preventing the escape of cooling oil from the closed channel through the end of the axial groove.

The present invention further relates to an electric motor comprising the motor rotor described above.

The present invention further relates to a vehicle comprising the electric motor described above.

### Brief Description of the Drawings

The abovementioned and other features and advantages of the present invention will become more obvious through the following detailed description of exemplary embodiments in conjunction with the drawings. Moreover, this description and the drawings merely serve an exemplary purpose and do not limit the scope of the present invention in any way. The drawings below have not been drawn meticulously in proportion according to actual dimensions, but focus on showing the substance of the present invention.
Fig. 1 is an exploded view of a motor rotor according to the present invention.
Fig. 2 is a sectional view of an example of a motor rotor according to the present invention.
Fig. 3 is a perspective view of a motor rotor according to the present invention, with a core part of the motor rotor omitted.
Fig. 4 is a sectional view of another example of a motor rotor according to the present invention.
Fig. 5 is a front view of an end plate of a motor rotor; and
Fig. 6 is a transparent view of end plates and a core part of a motor rotor.

### Detailed Description of the Embodiments

In order to clarify the objective, technical solutions and advantages of embodiments of the present invention, the technical solutions of embodiments of the present invention are described clearly and completely below with reference to the drawings of embodiments of the present invention.

Unless defined otherwise, the technical or scientific terms used herein shall have the common meanings understood by those skilled in the art. Words such as "a", "one" or "the" used in the description and claims of the present invention patent application do not indicate a quantity limit, but mean that there is at least one. Words such as "comprise" or "include" mean that the element or object appearing before the term covers the elements or objects and equivalents thereof listed after the term. Words such as "connect" or "link" are not restricted to a physical or mechanical connection, and may include an electrical connection, whether direct or indirect. The terms "upper", "lower", "left", "right" and the like are only used to indicate a relative positional relationship, and when the absolute position of a described object changes, the relative positional relationship may also change accordingly. The terms "axial" and "axial direction" refer to the direction of a rotation axis X of a motor rotor.

To facilitate description, the drawings of the present invention correspondingly simplify or omit components commonly used in the art, such as external connection lines and other components that are not relevant to the description of the present invention. These omitted or simplified components do not affect the understanding of the content of the present invention by a person skilled in the art.

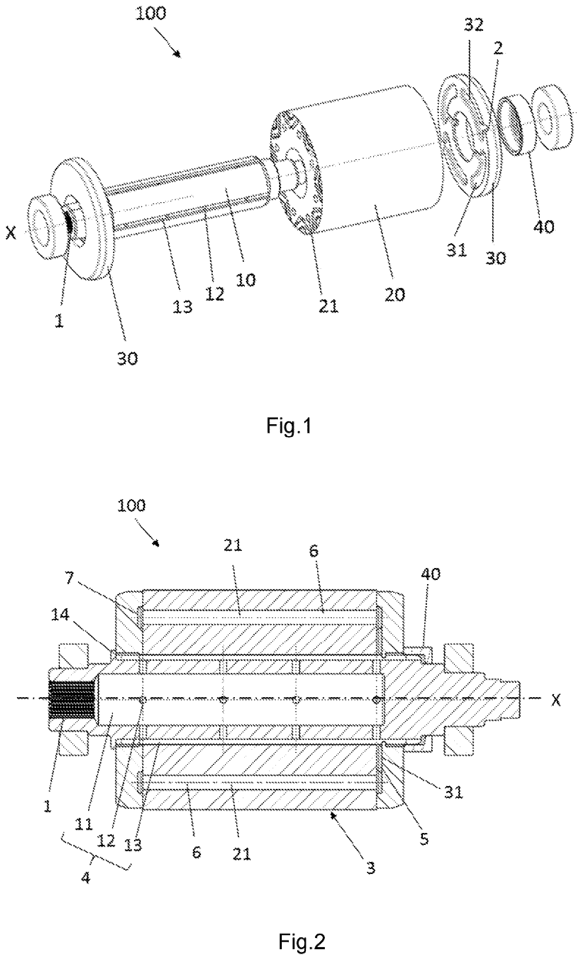

Fig. 1 shows a motor rotor 100 according to an exemplary embodiment of the present invention.

In this embodiment, the motor rotor 100 comprises a rotor shaft 10, which is located on an axis and rotates about a rotation axis X. A core part 20 is rotatably fixed to the rotor shaft 10, i.e. the core part 20 rotates together with the rotor shaft 10, with no relative rotation therebetween. Magnets of the motor rotor 100 are arranged in the core part 20. End plates 30 are arranged at two axial ends of the core part 20. The motor rotor 100 further comprises a sealing cover 40 arranged at one end of the core part 20.

The motor rotor 100 further comprises an oil cooling system, for cooling various parts of the motor rotor 100 with cooling oil, especially the magnets arranged in the core part 20. The oil cooling system comprises an inlet 1 arranged on the rotor shaft 10, an outlet 2 arranged on the end plate 30, and a closed channel 3 arranged between the inlet 1 and the outlet 2. Due to the sealing of the closed channel 3, after entering through the inlet 1, cooling oil can only flow along the closed channel 3 to the outlet 2 where it flows out, and can only then be used to cool other parts of the electric motor, such as the stator, etc. In other words, before flowing to the outlet 2, the cooling oil will not leave the oil cooling system of the motor rotor, and can only flow along a path defined by the closed channel 3, thus being able to fully cool the motor rotor.

The path defined by the closed channel 3 is distributed on various major components of the motor rotor 100, such that cooling oil sequentially flows past various major components of the motor rotor 100. Specifically, the closed channel 3 comprises the following, through which cooling oil sequentially flows: a first channel 4 located between the rotor shaft 10 and the core part 20, an intermediate channel 5 located on one of the end plates 30, a second channel 6 located in the core part 20, and an outlet channel 7 located on the other end plate 30. The intermediate channel 5 and the outlet channel 7 are located on different end plates, and the second channel 6 runs through the core part 20 to connect the intermediate channel 5 and the outlet channel 7.

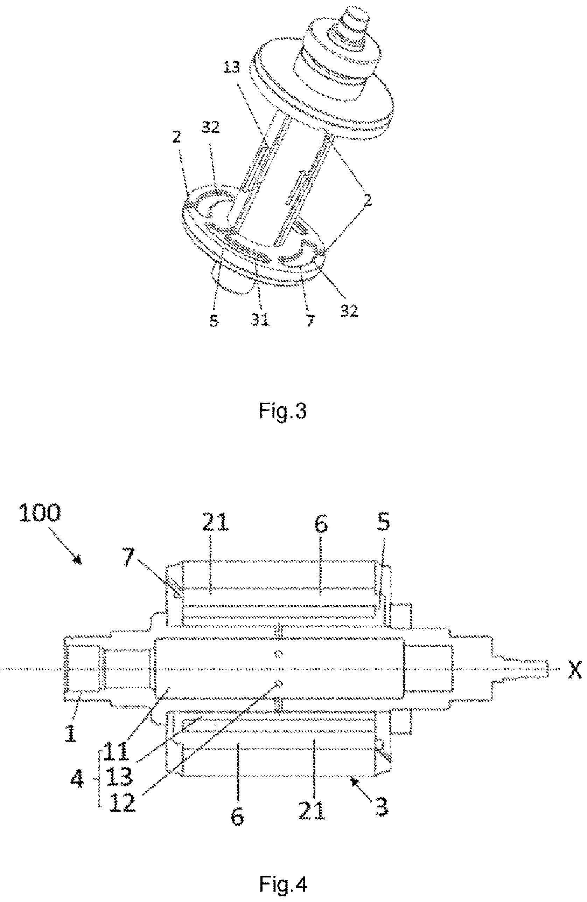

In an exemplary embodiment, referring to Fig. 2 - Fig. 3, the first channel 4 comprises a central hole 11 arranged at the center of the rotor shaft 10 and connected to the inlet 1, an axial groove 13 arranged on an outer surface of the rotor shaft 10, and a radial hole 12 connecting the central hole 11 and the axial groove 13. Cooling oil enters the central hole 11 of the rotor shaft 10 through the inlet 1, then flows through the radial hole 12 to the axial groove 13, and flows axially to the corresponding end plate 30 under the guidance of the axial groove 13. Multiple axial grooves 13 may be provided on the rotor shaft 10, and each axial groove 13 may be connected to the central hole 11 via multiple radial holes 12. The multiple axial grooves 13 may be symmetrical about the rotation axis X, and cooling oil may flow in opposite directions in two adjacent axial grooves 13, so as to flow to the end plates 30 at the two sides of the core part 20 respectively. For example, referring to Fig. 3, cooling oil flows in two adjacent axial grooves 13 to the end plates 30 at the two sides of the core part 20 in the upward and upward directions indicated by the arrows respectively.

In another exemplary embodiment, referring to Fig. 4, the first channel 4 comprises a central hole 11 arranged at the center of the rotor shaft 10 and connected to the inlet 1, an axial groove 13 arranged on an inner surface of the core part 20, and a radial hole 12 connecting the central hole 11 and the axial groove 13. Compared with having the axial groove 13 arranged on the outer surface of the rotor shaft 10, the processing cost associated with having the axial groove 13 arranged on the inner surface of the core part 20 is lower. Cooling oil enters the central hole 11 of the rotor shaft 10 through the inlet 1, then flows through the radial hole 12 to the axial groove 13, and flows axially to the corresponding end plate 30 under the guidance of the axial groove 13. Multiple axial grooves 13 may be provided on the inner surface of the core part 20, radial holes 12 are located at intermediate positions in the axial direction of the axial grooves 13, and each axial groove 13 may be connected to the central hole 11 by one radial hole 12. Having the radial holes 12 arranged at intermediate positions in the axial direction of the axial grooves 13 allows the split flows of cooling liquid to be distributed evenly, thereby maintaining rotor stability, heat dissipation and dynamic balance. It should be explained that having the radial holes 12 arranged at intermediate positions in the axial direction of the axial grooves 13 is merely one example, and the radial holes may be arranged as shown in Fig. 2; the present disclosure imposes no restrictions in this respect. The multiple axial grooves 13 may be symmetrical about the rotation axis X, and cooling oil may flow in opposite directions in two adjacent axial grooves 13, so as to flow to the end plates 30 at the two sides of the core part 20 respectively.

After passing through the axial groove 13 of the first channel 4, the cooling oil flows to the intermediate channel 5 located on one end plate 30. Referring to Fig. 2 - Fig. 5, the intermediate channel 5 comprises a first groove 31 arranged on an inner side of the corresponding end plate 30 (i.e. the side facing the core part 20). The first groove 31 comprises a first main part 31a and a first connecting part 31b. The first connecting part 31b is connected to the axial groove 13, and extends to the first main part 31a in a direction which at least has a radially outward component. Compared with the axial groove 13 on the outer surface of the rotor shaft 10 or the axial groove 13 on the inner surface of the core part 20, the first main part 31a is further outward in a radial direction, and closer to a radial position of the magnet in the core part 20.

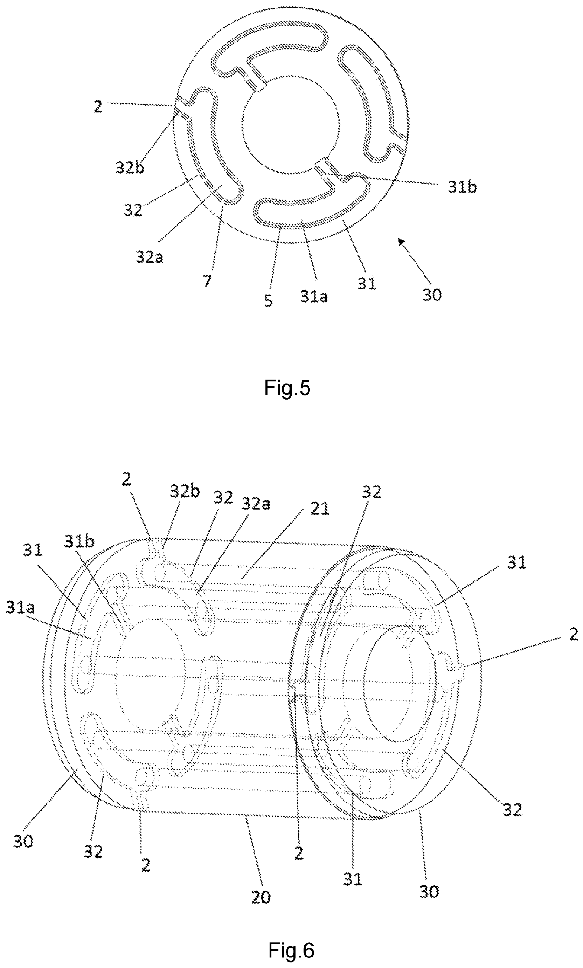

After passing through the first main part 31a of the intermediate channel 5, the cooling oil flows to the second channel 6 located in the core part 20. Referring to Figs. 1, 2, 4 and 6, the second channel 6 comprises an axial through-hole 21 running through the core part 20. The axial through-hole 21 is connected to the first main part 31a, and is arranged near the magnet of the motor rotor. Thus, the cooling oil flowing in the axial through-hole 21 is able to fully cool the magnet. The direction of flow of the cooling oil in the axial through-hole 21 is opposite to the direction of flow thereof in the axial groove 13, so the cooling oil flows toward the end plates 30 at the two sides of the core part 20 respectively. Multiple axial through-holes 21 which are symmetrical about the rotation axis X may be provided in the core part 20, for respectively cooling multiple magnets of the motor rotor. In the embodiment shown in Fig. 6, each first main part 31a corresponds to two axial through-holes 21. It can be envisaged that it may also be constructed so that each first main part 31a corresponds to one or other number of axial through-holes 21.

After passing through the axial through-hole 21 of the second channel 6, the cooling oil flows to the outlet channel 7 located on the other end plate 30. Referring to Fig. 2 - Fig. 5, the outlet channel 7 comprises a second groove 32 arranged on an inner side of the corresponding end plate 30 (i.e. the side facing the core part 20). The second groove 32 comprises a second main part 32a and a second connecting part 32b. The second main part 32a is connected to the axial through-hole 21, and the second connecting part 32b extends from the second main part 32a to the outlet 2. Cooling oil flows from the second main part 32a to the outlet 2 via the second connecting part 32b, and flows out of the motor rotor 100 through the outlet 2. In the embodiment shown in Fig. 6, each second main part 32a corresponds to two axial through-holes 21. It can be envisaged that it may also be constructed so that each second main part 32a corresponds to one or other number of axial through-holes 21.

Referring to Fig. 5, the end plate 30 is provided with first grooves 31 and also second grooves 32. The first grooves 31 and the second grooves 32 are arranged alternately on the same end plate 30 around the rotation axis X. As shown in Fig. 6, the two end plates 30 at the two ends of the core part 20 are arranged to rotate about the rotation axis X at a certain angle such that the first groove 31 of one end plate 30 and the second groove 32 of the other end plate 30 are at the same angular position and thus correspond to each other, and are connected by the axial through-hole 21.

Referring to Fig. 2, the rotor shaft 10 is provided with a flange 14 at the end that is near the inlet 1. The flange 14 abuts the end plate 30, to restrict the axial position of the rotor shaft 10. The axial groove 13 ends at the flange 14. The flange 14 and the end plate 30 can thus seal the axial groove 13. At the end opposite the inlet 1, for convenience of processing, the axial groove 13 arranged on the outer surface of the rotor shaft 10 is penetrating. The end plate 30 is unable to seal the axial groove 13, so the motor rotor 100 is further provided with the sealing cover 40 at the end opposite the inlet 1 for sealing the axial groove 13, and thus sealing the closed channel 3. In another exemplary embodiment shown in Fig. 4, the end plate 30 is able to seal the axial groove 13 because the axial groove 13 is arranged on the inner surface of the core part 20, so there is no need for an additional sealing cover to seal the axial groove 13.

In summary, the flow path of cooling oil in the motor rotor 100 is as follows: inlet 1 → central hole 11 → radial hole 12 → axial groove 13 → first connecting part 31b → first main part 31a → axial through-hole 21 → second main part 32a → second connecting part 32b → outlet 2. Since the rotor shaft 10 or the core part 20 has multiple axial grooves 13, the end plate 30 has multiple first grooves 31 and second grooves 32, and the core part 20 has multiple axial through-holes 21, the oil cooling system of the motor rotor 100 can define multiple flow paths. In the embodiment shown in Fig. 6, the oil cooling system defines four flow paths, corresponding to each of the end plates 30 being provided with four outlets 2. The four flow paths are symmetrical about the rotation axis X, and the axial flow directions of cooling oil in two adjacent flow paths are opposite. That is, if the outlet 2 of one flow path is located on the end plate 30 at the left side, then the outlet 2 of an adjacent flow path is located on the end plate 30 at the right side. It must be explained that four flow paths are merely one example, and the present disclosure imposes no restrictions on the number of flow paths. Thus, cooling oil can flow out through opposite end plates 30 of the motor rotor 100. When other components (e.g. the stator) of the electric motor are subsequently cooled, such an arrangement makes it easier for cooling oil to reach different axial parts of the electric motor.

In another aspect, the present disclosure also proposes an electric motor, comprising the motor rotor 100 described above.

In another aspect, the present disclosure also proposes a vehicle, comprising the electric motor mentioned above. The vehicle is for example a battery electric vehicle (BEV), a hybrid electric vehicle (HEV), a plug-in hybrid electric vehicle (PHEV), a range extended electric vehicle (Range extended EV), a fuel cell electric vehicle (FCEV), etc.

A description of the present invention has been given above, and should not be regarded as limiting it. Although certain exemplary embodiments of the present invention have been described, those skilled in the art will readily understand that many modifications may be made to the exemplary embodiments without departing from the novel teaching and advantages of the present invention. Therefore, all such modifications are intended to be included within the scope of the present invention as defined in the claims. It should be understood that the above is a description of the present invention and the present invention should not be deemed to be limited to the specific embodiments disclosed herein; in addition, modifications made to the disclosed embodiments and other embodiments are intended to be included within the scope of the present invention.

## Claims

1. A motor rotor (100), comprising
a rotor shaft (10) rotating about a rotation axis (X),
a core part (20) rotatably fixed to the rotor shaft (10),
end plates (30) arranged at two axial ends of the core part (20), **characterized in that** the motor rotor (100) further comprises an oil cooling system comprising
an inlet (1) arranged on the rotor shaft (10),
an outlet (2) arranged on the end plates (30), and
a closed channel (3) arranged between the inlet (1) and the outlet (2).

2. The motor rotor (100) according to claim 1, **characterized in that**
the closed channel (3) comprises the following, through which cooling oil sequentially flows: a first channel (4) located between the rotor shaft (10) and the core part (20), an intermediate channel (5) located on one of the end plates (30), a second channel (6) located in the core part (20), and an outlet channel (7) located on the other end plate (30).

3. The motor rotor (100) according to claim 2, **characterized in that**
the intermediate channel (5) comprises a first groove (31) arranged on an inner side of the corresponding end plate (30), the first groove (31) comprising a first main part (31a) and a first connecting part (31b) connected to the first channel (4).

4. The motor rotor (100) according to claim 3, **characterized in that**
the first channel (4) comprises a central hole (11) arranged at the center of the rotor shaft (10) and connected to the inlet (1), an axial groove (13) arranged on an outer surface of the rotor shaft (10) and connected to the first connecting part (31b), and a radial hole (12) connecting the central hole (11) and the axial groove (13).

5. The motor rotor (100) according to claim 3, **characterized in that**
the first channel (4) comprises a central hole (11) arranged at the center of the rotor shaft (10) and connected to the inlet (1), an axial groove (13) arranged on an inner surface of the core part (20) and connected to the first connecting part (31b), and a radial hole (12) connecting the central hole (11) and the axial groove (13).

6. The motor rotor (100) according to claim 3, **characterized in that**
the second channel (6) comprises an axial through-hole (21) running through the core part (20) and connected to the first main part (31a), the axial through-hole (21) being arranged close to a magnet of the motor rotor (100).

7. The motor rotor (100) according to claim 6, **characterized in that**
the outlet channel (7) comprises a second groove (32) arranged on an inner side of the corresponding end plate (30), the second groove (32) comprising a second main part (32a) connected to the axial through-hole (21) and a second connecting part (32b) connected to the outlet (2).

8. The motor rotor (100) according to claim 7, **characterized in that**
the first groove (31) and the second groove (32) are arranged alternately on the same end plate (30) around the rotation axis (X).

9. The motor rotor (100) according to claim 4, **characterized in that**
the motor rotor (100) further comprises a sealing cover (40) arranged at an end of the rotor shaft (10) which is opposite the inlet (1) for sealing the closed channel (3).

10. An electric motor, **characterized in that** the electric motor comprises the motor rotor (100) according to any one of claims 1 - 9.

11. A vehicle, **characterized in that** the vehicle comprises the electric motor according to claim 10.
